# EUROPÄISCHE PATENTSCHRIFT

(11) **EP 1 368 420 B1**
(45) Veröffentlichungstag und Bekanntmachung des Hinweises auf die Patenterteilung: **26.08.2009**
(21) Anmeldenummer: 02702347.2
(22) Anmeldetag: 06.02.2002
(51) Int. Cl.: C08J 9/224, C08J 9/26

(54) **EXPANDIERBARE POLYOLEFINPARTIKEL**
EXPANDABLE POLYOLEFIN PARTICLES
PARTICULES DE POLYOLEFINE EXPANSIBLES

(30) Priorität: 08.02.2001 DE 10105618
(43) Veröffentlichungstag der Anmeldung: 10.12.2003
(73) Patentinhaber: BASF SE, 67056 Ludwigshafen (DE)
(72) Erfinder: MALETZKO, Christian, 67122 Altrip (DE); KEPPELER, Uwe, 67126 Hochdorf-Assenheim (DE); HAHN, Klaus, 67281 Kirchheim (DE); DE GRAVE, Isidor, 67157 Wachenheim (DE)
(86) Internationale Anmeldenummer: PCT/EP2002/001192
(87) Internationale Veröffentlichungsnummer: WO 2002/062882

(56) Entgegenhaltungen:
- US-A- 5 623 012
- DATABASE WPI Section Ch, Week 199336 Derwent Publications Ltd., London, GB; Class A32, AN 1993-285115 XP002202968 & JP 05 200892 A (MITSUBISHI YUKA BADISCHE KK), 10. August 1993 (1993-08-10)
- DATABASE WPI Section Ch, Week 198828 Derwent Publications Ltd., London, GB; Class A18, AN 1988-193707 XP002202969 & JP 63 130646 A (SEKISUI PLASTICS CO LTD) , 2. Juni 1988 (1988-06-02)
- PATENT ABSTRACTS OF JAPAN vol. 010, no. 028 (C-326), 4. Februar 1986 (1986-02-04) & JP 60 181139 A (NIPPON STYREN PAPER KK), 14. September 1985 (1985-09-14)
- PATENT ABSTRACTS OF JAPAN vol. 007, no. 273 (C-198), 6. Dezember 1983 (1983-12-06) & JP 58 152027 A (KANEGAFUCHI KAGAKU KOGYO KK), 9. September 1983 (1983-09-09)

## Beschreibung

Die Erfindung betrifft expandierbare Polyolefinpartikel, die mit einem Mittel zur Verhinderung des Verklebens beim Verschäumen beschichtet sind.

Polyolefin-Schaumpartikel werden in zunehmendem Maße zur Herstellung von Schaumstoff-Formteilen im Automobilbau, im Verpackungswesen und im Freizeitbereich eingesetzt. Expandierte Polypropylen-Schaumpartikel (EPP) werden in technischem Maßstab hergestellt durch Imprägnieren von Polypropylen-Granulat mit einem flüchtigen Treibmittel in wässriger Suspension unter Druck und Entspannen, wobei die imprägnierten Partikel aufschäumen. Als Treibmittel werden in der Praxis Butan, Dichlordifluormethan und CO₂ eingesetzt. Da diese Treibmittel verhältnismäßig rasch aus dem Polypropylen wieder ausdiffundieren, wurden so hergestellte treibmittelhaltige Polypropylenpartikel als nicht lagerfähig angesehen.

Die deutschen Patentanmeldungen 199 50 420 und 100 03 021 beschreiben nun erstmals Treibmittel enthaltende, expandierbare Polyolefinpartikel mit einer Schüttdichte von mehr als 400 g/l, die längere Zeit lagerfähig sind, ohne daß wesentliche Mengen Treibmittel entweichen, so daß sie mit überhitztem Wasserdampf unter Druck zu Schüttdichten von weniger als 200 g/l aufschäumbar sind. Nach DE 199 50 420 werden die Partikel hergestellt, indem man Polyolefin-Granulat in einem Druckbehälter in wässriger Suspension bei erhöhter Temperatur mit einem organischen Treibmittel, vorzugsweise mit Pentan, imprägniert und den Ansatz vor dem Entspannen auf Temperaturen unter 100°C abkühlt. Nach DE 100 03 021 wird Polypropylen-Granulat auf einem Extruder mit dem organischen Treibmittels und einem Nucleierungsmittel vermischt und ein Schmelzstrang wird unter solchen Temperatur- und Druckbedingungen ausgepreßt und granuliert, unter denen kein Aufschäumen erfolgt.

Es hat sich nun gezeigt, daß die expandierbaren Polyolefinpartikel beim Verschäumen zum Verkleben und Verklumpen neigen, insbesondere wenn man bei relativ hohen Temperaturen, d.h. bei hohem Wasserdampfdruck arbeitet, um Schüttdichten unterhalb von 100 g/l zu erreichen. Da bei der Herstellung der expandierbaren Partikel durch Imprägnieren mit Treibmittel in wässriger Suspension ohnehin größere Mengen Metallcarbonate oder -phosphate als Dispergierhilfsmittel zugesetzt werden müssen um zu verhindern, daß das eingesetzte Polyolefingranulat in der Suspension verklebt, wäre es naheliegend gewesen, diese Dispergierhilfsmittel nicht zu entfernen, sondern auf den entstandenen expandierbaren Partikeln zu belassen. Da aber Metallcarbonate bzw. -phosphate das Verschweißen der nach der Expansion erhaltenen Schaumpartikel stören würden, müßten sie durch aufwendige Säurewaschung von den Schaumpartikeln entfernt werden, wobei während der Verarbeitung salzhaltiges Abwasser anfallen würde.

Der Erfindung lag daher die Aufgabe zugrunde, expandierbare Polyolefin-Partikel bereitzustellen, die beim Verschäumen nicht verkleben und die problemlos zu Schaumstoff- Formkörpern verschweißt werden können.

Diese Aufgabe wird erfindungsgemäß dadurch gelöst, daß die expandierbaren Polyolefin-Partikel mit 0,01 bis 3 Gew.-% eines Salzes und/oder eines Esters einer langkettigen Fettsäure beschichtet werden. Diese Beschichtung kann nach dem Expandieren auf den Schaumpartikeln verbleiben, da sie die Verschweißung zu Schaumstoffen nicht oder nur sehr wenig stört.

Die DE-C 19541725 beschreibt expandierbare Styrolpolymerisate, die zur Verminderung der Wasseraufnahmefähigkeit mit einer Mischung aus Glycerintristearat und einem hydrophoben Silikat beschichtet sind.

Polyolefine im Sinne der vorliegenden Erfindung sind
a) Homopolypropylen,
b) Randomcopolymere des Propylens mit 0,1 bis 15. vorzugsweise 0,5 bis 12 Gew.-% Ethylen und/oder einem C₄-C₁₀-α-Olefin, vorzugsweise ein Copolymer von Propylen mit 0,5 bis 6 Gew.-% Ethylen oder mit 0,5 bis 15 Gew.-% Buten-1 oder ein Terpolymer aus Propylen, 0,5 bis 6 Gew.-% Ethylen und 0,5 bis 6 Gew.-% Buten-1, oder
c) Mischung von a) oder b) mit 0,1 bis 75, vorzugsweise 3 bis 50 Gew.-% eines Polyolefin-Elastomeren, z.B. eines Ethylen/Propylen-Blockcopolymeren mit 30 bis 70 Gew.-% Propylen.
d) Polyethylen (PE-LLD, -LD, -MD, -HD) und
e) Mischung aus den unter a) bis d) genannten Polyolefinen (gegebenenfalls nach Zugabe von Phasenvermittlern). Der Kristallitschmelzpunkt (DSC-Maximum) der unter a) bis e) aufgelisteten Polyolefine liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp für Propylenpolymerisate und 190°C, 2,16 kp für Ethylenpolymerisate) nach DIN 53 735 zwischen 0,1 und 100 g/10 min.

Bevorzugte Polyolefine sind Homo- oder Copolymere des Propylens mit bis zu 15 Gew.-% Ethylen und/oder Buten-1, besonders bevorzugt sind Propylen/Ethylen-Copolymere mit 1 bis 5 Gew.-% Ethylen. Sie besitzen eine Schmelztemperatur von 130 bis 160°C, und eine Dichte (bei Raumtemperatur) von etwa 900 g/l.

Das Olefinpolymerisat kann mit bis zu 50 % seines Gewichts eines andersartigen Thermoplast mit einer Glastemperatur (DSC-Wendepunkt) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor P 1015 (Fa. EXXON), zugesetzt werden können.

Es hat sich gezeigt, daß die Erfindung auch ohne Zumischen eines artfremden Thermoplasten durchführbar ist. Dies ist insofern bevorzugt, als durch einen Fremdthermoplasten die Recyclierbarkeit des Polyolefins bzw. des daraus hergestellten Schaumstoffs leidet. Kautschukartige Ethylen-/Propylen-Copolymerisate, die zur Elastifizierung zugesetzt werden können, sind in diesem Sinne nicht artfremd.

Das Polyolefin kann die üblichen Zusatzstoffe enthalten, wie Antioxidantien, Stabilisatoren, Flammschutzmittel, Wachse, Nucleierungsmittel, Füllstoffe, Pigmente und Farbstoffe.

Zur Herstellung der erfindungsgemäßen expandierbaren Polyolefin-partikel geht man aus von Polyolefingranulat, welches vorzugsweise mittlere Durchmesser von 0,2 bis 10, insbesondere von 0,5 bis 5 mm aufweist. Dieses meist zylinderförmige oder runde Minigranulat wird hergestellt durch Extrudieren des Polyolefins, gegebenenfalls zusammen mit dem zuzumischenden Thermoplasten und weiteren Zusatzstoffen, Auspressen aus dem Extruder, gegebenenfalls Abkühlen und Granulieren.

Das Minigranulat sollte vorzugsweise 0,001 bis 10, vorzugsweise 0,1 bis 5 und insbesondere 0,5 bis 3 Gew.-% eines Nucleierungsmittels enthalten. Geeignet sind z.B. Talkum und/oder Wachse sowie Ruß, Graphit und pyrogene Kieselsäuren. Sie bewirken, daß ein feinzelliger Schaum entsteht, in manchen Fällen ermöglichen sie überhaupt erst das Schäumen.

Bei dem bevorzugten Herstellungsverfahren für die expandierbaren Partikel wird Granulat in einem Rührreaktor in einem Suspensionsmedium dispergiert. Bevorzugtes Suspensionsmedium ist Wasser. In diesem Fall müssen Suspensionshilfsmittel zugesetzt werden, um eine gleichmäßige Verteilung des Minigranulats im Suspensionsmedium zu gewährleisten. Geeignete Suspensionshilfsmittel sind wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-% eingesetzt.
Auf den Zusatz von Suspensionsstabilisatoren kann verzichtet werden, wenn das Suspensionsmedium nach WO-A 99/10419 eine niedrigere Dichte aufweist als das suspendierte Granulat. Dies ist z.B. der Fall, wenn das Suspensionsmedium Ethanol oder eine Mischung von Ethanol mit bis zu 50 Gew.-% Wasser ist.

Der Siedepunkt des Treibmittels sollte zwischen -5 und 150°C, insbesondere zwischen 25 und 125°C liegen. Das Treibmittel ist vorzugsweise ein Alkan, ein Alkanol, ein Keton, ein Ether oder ein Ester. Besonders bevorzugt sind Pentane und Hexane, insbesondere s-Pentan, ferner 3,3-Dimethyl-2-butanon und 4-Methyl-2-pentanon. Auch Treibmittelmischungen können eingesetzt werden. Das Treibmittel ist vorzugsweise halogenfrei. Treibmittelmischungen, die geringe Mengen, vorzugsweise weniger als 10, insbesondere weniger als 5 Gew.-% eines halogenhaltigen Treibmittels, z.B. Methylenchlorid oder Fluorkohlenwasserstoffe enthalten, sollen jedoch nicht ausgeschlossen werden.

Das Treibmittel wird in Mengen von vorzugsweise 2 bis 50 Gew.-%, insbesondere 5 bis 30 Gew.-%, bezogen auf das Granulat, eingesetzt. Die Treibmittelzugabe kann dabei vor, während oder nach dem Aufheizen des Reaktorinhalts erfolgen. Es kann auf einmal oder in Teilportionen zugeführt werden.

Beim Imprägnieren sollte die Temperatur in der Nähe der Erweichungstemperatur des Polyolefins liegen. Sie kann 40°C unter bis 25°C über der Schmelztemperatur (Kristallitschmelzpunkt) liegen, bevorzugt sollte sie jedoch unterhalb der Schmelztemperatur liegen. Bei Polypropylen sind Imprägniertemperaturen zwischen 120°C und 160°C bevorzugt.

Je nach Menge und Art des Treibmittels sowie nach der Höhe der Temperatur stellt sich im Reaktor ein Druck ein, der im allgemeinen höher als 2 bar ist und 40 bar nicht übersteigt.

Die Imprägnierzeiten liegen im allgemeinen zwischen 0,5 und 10 Stunden. Vor dem Entspannen und der Entnahme aus dem Rührreaktor wird die Suspension auf Temperaturen unterhalb von 100°C, vorzugsweise auf 10 bis 50°C abgekühlt, indem man z.B. Kühlwasser durch den Reaktormantel leitet. Zweckmäßigerweise wird dann das schwerlösliche Suspensionshilfsmittel durch Zugabe einer Säure aufgelöst. Nach dem Entspannen und dem Ablassen aus dem Reaktor werden die treibmittelhaltigen Partikel vom Suspensionsmedium abgetrennt und gewaschen.

Bei dem alternativen Herstellverfahren für die expandierbaren Partikel werden 100 Gew.-teile Polyolefin-Granulat zusammen mit 3 bis 30 Gew.-teilen eines flüchtigen organischen Treibmittels und 0,01 bis 8, vorzugsweise 0,1 bis 5 Gew.-teilen eines feinteiligen Nucleierungsmittels sowie ggf. weiteren üblichen Zusatzstoffen einem Extruder zugeführt und dort bei einer Temperatur, bei der das treibmittelhaltige Gemisch als Schmelze vorliegt, vermischt, vorzugsweise zwischen 160 und 220°C.

Geeignete Nucleierungsmittel sind z.B. Talkum, Polyolefin-Wachse, Graphitpulver, pyrogene Kieselsäuren, Citronensäureester sowie ggf. modifizierte Bentonite. als weitere Zusatzstoffe kommen Antioxidantien, Stabilisatoren, Flammschutzmittel, Füllstoffe und Pigmente in Frage. An einer späteren Stelle des Extruders werden 3 bis 30, vorzugsweise 5 bis 25 Gew.-teile des flüchtigen organischen Treibmittels mit Hilfe einer Pumpe zudosiert. Es ist auch möglich, das Nucleierungsmittel und ggf. andere Additive erst hier, zusammen mit dem Treibmittel zuzugeben, wobei die Zusatzstoffe zweckmäßigerweise im Treibmittel gelöst bzw. suspendiert sind.

Um zu verhindern, daß die Schmelze bereits beim Austritt aus dem Extruder aufschäumt, wird erfindungsgemäß das Auspressen und Granulieren des Schmelzestrangs bei solchen Temperatur- und Druckbedingungen vorgenommen, bei dem praktisch kein Schäumen des Granulats erfolgt. Diese Bedingungen können je nach der Art des Olefinpolymerisats, der Zusatzstoffe und insbesondere der Art und Menge des Treibmittels unterschiedlich sein. Die optimalen Bedingungen können durch Vorversuche einfach ermittelt werden.

Eine technisch günstige Methode ist die Unterwassergranulierung in einem Wasserbad, welches eine Temperatur unterhalb von 100°C aufweist und unter einem Druck von mehr als 2 bar steht. Die Temperatur darf nicht zu tief sein, da sonst die Schmelze an der Düsenplatte erstarrt, sie darf nicht zu hoch sein, da sonst die Schmelze expandiert. Je höher der Siedepunkt des Treibmittels und je geringer die Treibmittelmenge ist, desto höher kann die Wassertemperatur und desto niedriger kann der Druck sein. Bei dem besonders bevorzugten Treibmittel s-Pentan liegt die optimale Temperatur des Wasserbads zwischen 30 und 60°C, der Wasserdruck beträgt 8 bis 12 bar.

Die expandierbaren Partikel werden erfindungsgemäß mit 0,01 bis 3, vorzugsweise 0,1 bis 1,0 %, bezogen auf ihr Gewicht, eines Antiverklebungsmittels beschichtet. Dies kann in üblichem Mischaggregaten, z.B. in Schaufelmischern geschehen. Geeignete Antiverklebungsmittel sind Metallseifen, d.h. Metallsalze langkettiger, gegebenenfalls verzweigter aliphatischer, cycloaliphatischer Carbonsäuren (siehe "Metallic Soaps" by Szczepanek + Könen, Ullmann's Encyclopedia, 6. Ed., Wiley VCH), wobei Salze zwei- und dreiwertiger Metalle mit aliphatischen C₁₆-C₃₆-Monocarbonsäuren bevorzugt sind. Besonders bevorzugt ist Calciumstearat. Ebenfalls geeignet sind Wachs und Fette, d.h. Ester der genannten langkettigen Carbonsäuren bevorzugt Glycerinester, insbesondere Glycerinstearat. Auch Gemische der genannten Salze und Ester können eingesetzt werden. Ferner sind auch Amide langkettiger Fettsäuren geeignet. Es hat sich gezeigt, daß hydrophobe Antiverklebungsmittel besonders gut geeignet sind.

Neben den erfindungsgemäßen Antiverklebungsmitteln enthält die Beschichtung vorzugsweise noch Antiblockmittel in Mengen von 0,01 bis 0,5 Gew.-% und/oder Antistatika in Mengen von 0,01 bis 0,3 Gew.-%, jeweils bezogen auf die Partikel. Die Antiblockmittel verhindern, daß die pulverförmigen-Antiverklebungsmittel verblokken. Geeignet sind z.B. feinteilige Kieselsäure, Talkum und Bentonit. Die Antistatika verhindern, daß die Antiverklebungsmittel sich elektrostatisch aufladen und an der Wand-oder dem Rührer des Mischaggregats anhaften. Geeignet sind z.B. Alkylsulfonate, Alkylsulfate und -phosphate, Fettalkoholethoxylate und quartäre Ammoniumverbindungen.

Die treibmittelhaltigen Partikel können nach üblichen Methoden mit Heißluft oder Wasserdampf in Druckvorschäumern verschäumt werden. Beim Verschäumen mit Dampf werden je nach Art des Treibmittels, der Polymermatrix und der gewünschten Schüttdichte Dampfdrucke zwischen 2 und 4,5 bar angewandt, die Schäumzeiten variieren zwischen 3 und 30 sec, die Temperatur beim Schäumen sollte oberhalb von 100°C liegen, bei Polypropylen insbesondere zwischen 130 und 160°C. Beim einmaligen Schäumen werden Schüttdichten unter 200 g/l erreicht. Aus technischen oder wirtschaftlichen Gründen kann es zweckmäßig seih, niedrige Schüttdichten auch durch mehrmaliges Schäumen einzustellen.

Aus den dabei erhaltenen Schaumpartikeln können nach bekannten Methoden Schaumstoff-Formteile hergestellt werden.

Die in den Beispielen genannten Teile und Prozente beziehen sich auf das Gewicht.

### Beispiele

A. Herstellung des treibmittelhaltigen Polypropylen-Granulats Einsatzstoffe:
   - PP 1:: Novolen 3200 MC; Polypropylen der Targor GmbH
   - PP 2:: Novolen 3300, Polypropylen der Targor GmbH
   - Wachs:: Luwax AF31; Polyethylen (Mn 3000) der BASF AG
   - Talkum:: Typ HF 325
   - Ruß:: Elftex 570 (Fa. Cabott)
   - Stab 1:: Ultranox 626 (Fa. General Electric)
   - Stab 2:: Lowinox TBM 6 (Fa. Great Lakes Chem.)
   - GTS:: Glyzerintristearat
   - GMS:: Glyzerinmonostearat
   - Antiblock:: Aerosil R 972; Fa. Degussa AG
   - Antistat:: Armostat 3002; Fa. Akzo Chemie GmbH
   - ZnS:: Zinkstearat
   - MgS:: Magnesiumstearat
   - CaS:: Calciumstearat
   - AIS:: Aluminium-Distearat
   - St S:: Stearylstearat
   - Na S:: Natriumstearat

### Granulatherstellung:

### Granulat G 1

100 Teile PP 1 wurden mit 1 Teil Talkum und 0,5 Teilen Wachs gemischt und über einen Doppelschneckenextruder zu Granulat mit 1:d = 3:1 und 1,3 mg Gewicht verarbeitet.

### Granulat G 2

100 Teile PP 2 wurden mit 2 Teilen Ruß, 1 Teil Talkum, 0,5 Teilen Wachs, je 0,05 Teilen Stab 1 und Stab 2 gemischt und zu Granulat mit 1:d = 2,1:1 und 1,3 mg Gewicht verarbeitet.

Stoffmengen für die Imprägnierung:
- Granulat:: 296,1 kg
- Wasser:: 658,1 kg
- s-Pentan: 62,2 kg
- Calciumcarbonat:: 13,3 kg (Calcilit 1G; Fa. Alfa)
- Lutensol AO 3109:: 53,3 g (Fa. BASF AG)

### Imprägnierung:

In einem 1,36 m³-Rührbehälter mit Kreuzbalkenrührer und Stromstörern wurden die Einsatzstoffe eingegeben. Der Ansatz wurde innerhalb von 2,5 Stunden auf Imprägniertemperatur (140°C bei Granulat 1 und 133°C bei Granulat 2) gebracht und dort 30 min gehalten. Dann wurde auf Raumtemperatur abgekühlt und mit 18,3 Liter 65 %iger Salpetersäure das Calciumcarbonat aufgelöst. Das imprägnierte Granulat wurde gewaschen und über eine Zentrifuge vom Wasser abgeschleudert. Die Trocknung erfolgte mit Hilfe eines Stromtrockners. Unmittelbar vor dem Trocknen wurde ein handelsübliches Antistatikum aufgetragen, um elektrostatische Aufladung zu vermeiden. Das Granulat 1 wies einen Treibmittelgehalt von 11,0 % auf, das Granulat 2 10,8 %. Das DSC war durch einen Doppelpeak im Schmelzbereich gekennzeichnet, wobei der Hochtemperaturpeak beim Granulat 1 bei 166,2°C und beim Granulat 2 bei 160,8°C lag.

### B. Herstellung der Beschichtungsmittel

Die Komponenten der einzelnen Beschichtungsmittel in den in Tabelle 1 angegebenen Prozenten wurden für mehrere Minuten sehr intensiv miteinander vermischt. Die resultierenden Beschichtungsmittel (B1-B10) waren pulverförmig und gut rieselfähig.

**Tabelle 1**

| | B1 | B2 | B3 | B4 | B5 | B6 | B7 | B8 | B9 | B10 |
|---|---|---|---|---|---|---|---|---|---|---|
| ZnS | 46 | | | | | | | | | |
| MgS | | 46 | | | | | | | | |
| AIS | | | 46 | | | | | | | |
| CaS | | | | 46 | 46 | | | 77 | | |
| NaS | | | | | | | | | 77 | |
| StS | | | | | | | | | | 77 |
| GMS | | | | | 40 | 77 | | | | |
| GTS | 40 | 40 | 40 | 40 | | | 77 | | | |
| Antiblock | 10 | 10 | 10 | 10 | 10 | 16 | 16 | 16 | 16 | 16 |
| Antistat | 4 | 4 | 4 | 4 | 4 | 7 | 7 | 7 | 7 | 7 |

### C. Beschichtung

Die Beschichtungsmittel wurden in einem Schaufelmischer intensiv mit den unter A beschriebenen, expandierbaren Granulaten gemischt und so auf das Granulat aufgetragen. Die in Tabelle 2 genannten Mengen sind Teile pro 100 Teile PP-Granulat. Die Mischzeit betrug 2 - 3 min.

### D. Verschäumung und mechanische Eigenschaften

Zum Verschäumen wurde ein mit Dampf betriebener Druckvorschäumer eingesetzt, wie er in der EPS-Verarbeitung üblich ist. Die Dampfdrucke wurden schrittweise erhöht wobei die Bedampfungszeit jeweils 12 sec. betrug. Nach dem Trocknen der Schaumpartikel wurde durch Sieben der Anteil an Verklebungen und die Schüttdichte bestimmt. In Tabelle 2 sind die maximalen Dampfdrucke angegeben, bei denen der Anteil an Verklebungen noch < 1% war. Als Maß für die Verschweißungsgüte wurde für einige Proben die Zugfestigkeit nach DIN 53571 bestimmt.

Je höher der maximal anwendbare Dampfdruck ist, desto niedriger ist die erreichbare Schüttdichte. Die niedrigsten Schüttdichten wurden also mit Calciumstearat erhalten (Beispiele 6 bis 8). Aufgrund der unterschiedlichen Polypropylentypen, die für die Herstellung der Granulate 1 bzw. 2 eingesetzt wurden, unterscheiden sich die erreichbaren maximalen Dampfdrucke und das mechanische Niveau der Formteile.

**Tabelle 2**

| | Bsp. 1 | Bsp. 2 | Bsp. 3 | Bsp. 4 | Bsp. 5 | Bsp. 6 | Bsp. 7 | Bsp. 8 | Bsp. 9 | Bsp. 10 | Bsp. 11 | Bsp. 12 | Bsp. 13 | Bsp. 14 | Bsp. 15 |
|---|---|---|---|---|---|---|---|---|---|---|---|---|---|---|---|
| Beschichtung | | | | | | | | | | | | | | | |
| Granulat | G1 | G1 | G1 | G1 | G1 | G1 | G1 | G1 | G2 | G2 | G2 | G2 | G2 | G2 | G2 |
| Beschichtung | keine | B1 | B1 | B2 | B3 | B4 | B4 | B8 | B4 | B8 | B5 | B6 | B7 | B9 | B10 |
| Menge [TI] | --- | 0,5 | 0,7 | 0,5 | 0,5 | 0,5 | 0,7 | 0,3 | 0,7 | 0,2 | 0,7 | 0,3 | 0,3 | 0,3 | 0,3 |
| Verschäumung* | | | | | | | | | | | | | | | |
| Dampfdruck [bar] | 2,3** | 2,4 | 2,6 | 3,0 | 2,9 | 3,4 | 4,0 | 4,0 | 3,5 | 3,2 | 3,3 | 2,5 | 2,1 | 2,5 | 2,1 |
| Schüttdichte [g/l] | 222 | 182 | 121 | 82 | 90 | 65 | 53 | 53 | 54 | 65 | 52 | 72 | 78 | 107 | 91 |
| Mechanik | | | | | | | | | | | | | | | |
| Formteidichte [g/l] | | | | | | 77 | 79 | 58 | | | | | | | |
| Zugfestigkeit [kPa) | | | | | | 915 | 816 | 815 | | | | | | | |

| | | | | | | | | | | | | | | | |
|---|---|---|---|---|---|---|---|---|---|---|---|---|---|---|---|
| * es sind die Versuche mit max. Dampfdruck aufgeführt, die noch einen Verklebungsanteil <1 % aufweisen; ** hier war bereits bei 2,3 bar der Anteil an Verklebungen >>1 % | | | | | | | | | | | | | | | |

## Patentansprüche

1. Expandierbare Polyolefinpartikel mit einer Schüttdichte von mehr als 400 g/l, die 1 bis 40 Gew.-% eines flüchtigen organischen Treibmittels enthalten, **dadurch gekennzeichnet, daß** sie eine Beschichtung enthaltend 0,01 bis 3 Gew.-%, bezogen auf die Partikel, eines Salzes und/oder eines Esters und/oder eines Amids einer langkettigen Carbonsäure als Antiverklebungsmittel aufweisen.

2. Partikel nach Anspruch 1, **dadurch gekennzeichnet, daß** das Antiverklebungsmittel ein Salz oder ein Ester einer aliphatischen Monocarbonsäure mit 16 bis 36 C-Atomen, vorzugsweise von Stearinsäure, ist.

3. Partikel nach Anspruch 2, **dadurch gekennzeichnet, daß** das Antiverklebungsmittel ein Salz eines zwei- oder dreiwertigen Metalls, vorzugsweise Calciumstearat, ist.

4. Partikel nach Anspruch 2, **dadurch gekennzeichnet, daß** das Antiverklebungsmittel ein Glycerinester, vorzugsweise Glycerintristearat, ist.

5. Partikel nach Anspruch 1, **dadurch gekennzeichnet, daß** das Antiverklebungsmittel hydrophob ist.

6. Partikel nach Anspruch 1, **dadurch gekennzeichnet, daß** die Beschichtung zusätzlich 0,01 bis 0,5 Gew.-%, bezogen auf die Partikel, eines Antiblockmittels enthält.

7. Partikel nach Anspruch 1, **dadurch gekennzeichnet, daß** die Beschichtung zusätzlich 0,01 bis 0,3 Gew.-%, bezogen auf die Partikel, eines Antistatikums enthält.

8. Expandierbare Polyolefinpartikel nach Anspruch 1, **dadurch gekennzeichnet, daß** das Polyolefin ein Propylenpolymerisat, vorzugsweise ein Copolymerisat des Propylens mit bis zu 15 Gew.-% Ethylen und/oder Buten-1 ist.

9. Verfahren zum Verschäumen von expandierbaren Polyolefin-partikel mit einer Schüttdichte von mehr als 400 g/l mit Heißluft oder Wasserdampf zu Schaumpartikeln mit einer Schüttdichte von 200 g/l oder weniger, **dadurch gekennzeichnet, daß** man expandierbare Polyolefinpartikel mit einer Beschichtung, enthaltend 0,01 - 3 Gew.-%, bezogen auf die Partikel, eines Salzes, Esters oder Amids einer aliphatischen C₁₆-C₃₆-Monocarbonsäure, einsetzt.

10. Verwendung der expandierbaren Polyolefinpartikel nach Anspruch 1 zur Herstellung von Schaumpartikeln und Schaumstoff-Formteilen.

## Claims

1. An expandable polyolefin bead material with a bulk density of more than 400 g/l, which comprises from 1 to 40% by weight of a volatile organic blowing agent, and which has a coating comprising from 0.01 to 3% by weight, based on the bead material, of a salt and/or ester and/or amide of a long-chain carboxylic acid, as an anticaking agent.

2. The bead material according to claim 1, wherein the anticaking agent is a salt or an ester of an aliphatic monocarboxylic acid having from 16 to 36 carbon atoms, preferably of stearic acid.

3. The bead material according to claim 2, wherein the anticaking agent is a salt of a bi- or trivalent metal, preferably calcium stearate.

4. The bead material according to claim 2, wherein the anticaking agent is a glycerol ester, preferably glycerol tristearate.

5. The bead material according to claim 1, wherein the anticaking agent is hydrophobic.

6. The bead material according to claim 1, wherein the coating also comprises from 0.01 to 0.5% by weight, based on the bead material, of an antiblocking agent.

7. The bead material according to claim 1, wherein the coating also comprises from 0.01 to 0.3% by weight, based on the bead material, of an antistat.

8. The expandable polyolefin bead material according to claim 1, wherein the polyolefin is a propylene polymer, preferably a copolymer of propylene with up to 15% by weight of ethylene and/or 1-butene.

9. A process for the foaming of expandable polyolefin bead material with a bulk density of more than 400 g/l, using hot air or steam, to give foam beads with a bulk density of not more than 200 g/l, which comprises using expandable polyolefin bead material with a coating comprising from 0.01 to 3% by weight, based on the bead material, of a salt, ester, or amide of an aliphatic C₁₆-C₃₆ monocarboxylic acid.

10. The use of the expandable polyolefin bead material according to claim 1 for producing foam beads or foam moldings.

## Revendications

1. Particules de polyoléfine expansibles ayant une densité apparente de plus de 400 g/l, qui contiennent de 1 à 40 % en poids d'un agent d'expansion organique volatil, **caractérisées en ce qu'**elles présentent un enrobage contenant de 0,01 à 3 % en poids, par rapport aux particules, d'un sel et/ou d'un ester et/ou d'un amide d'un acide carboxylique à longue chaîne, en tant qu'agent anti-collage.

2. Particules selon la revendication 1, **caractérisées en ce que** l'agent anti-collage est un sel ou un ester d'un acide monocarboxylique aliphatique ayant de 16 à 36 atomes de carbone, de préférence d'acide stéarique.

3. Particules selon la revendication 2, **caractérisées en ce que** l'agent anti-collage est un sel d'un métal divalent ou trivalent, de préférence le stéarate de calcium.

4. Particules selon la revendication 2, **caractérisées en ce que** l'agent anti-collage est un ester de glycérol, de préférence le tristéarate de glycérol.

5. Particules selon la revendication 1, **caractérisées en ce que** l'agent anti-collage est hydrophobe.

6. Particules selon la revendication 1, **caractérisées en ce que** l'enrobage en outre contient de 0,01 à 0,5 % en poids, par rapport aux particules, d'un agent anti-adhérence de contact.

7. Particules selon la revendication 1, **caractérisées en ce que** l'enrobage en outre contient de 0,01 à 0,3 % en poids, par rapport aux particules, d'un agent antistatique.

8. Particules de polyoléfine expansibles selon la revendication 1, **caractérisées en ce que** la polyoléfine est un polymère de propylène, de préférence un copolymère du propylène avec jusqu'à 15 % en poids d'éthylène ou de butène-1.

9. Procédé pour l'expansion de particules de polyoléfine expansibles ayant une densité apparente de plus de 400 g/l, à l'aide d'air chaud ou de vapeur d'eau, en particules de mousse ayant une densité apparente de 200 g/l ou moins, **caractérisé en ce qu'**on utilise des particules de polyoléfines expansibles comportant un enrobage qui contient de 0,01 à 3 % en poids, par rapport aux particules, d'un sel, ester ou amide d'un acide monocarboxylique aliphatique en C₁₆-C₃₆.

10. Utilisation des particules de polyoléfine expansibles selon la revendication 1, pour la production de particules de mousse et de pièces moulées en mousse.
